# EUROPÄISCHE PATENTANMELDUNG

(11) **EP 3 231 767 A1**
(43) Veröffentlichungstag der Anmeldung: **18.10.2017**
(21) Anmeldenummer: 17152137.0
(22) Anmeldetag: 19.01.2017
(51) Int. Cl.: B81C 1/00, C23F 1/20, G02B 5/00

(54) **VERFAHREN ZUR HERSTELLUNG EINES OBJEKTES FÜR OPTISCHE ANWENDUNGEN AUS EINER ALUMINIUMBASISLEGIERUNG UND ENTSPRECHEND HERGESTELLTES OBJEKT**

(30) Priorität: 14.04.2016 AT 503262016
(71) Anmelder: LKR Leichtmetallkompetenzzentrum Ranshofen GmbH, 5282 Ranshofen (AT)
(72) Erfinder: Österreicher, Johannes, 5230 Mattighofen (AT)
(74) Vertreter: Wirnsberger & Lerchbaum Patentanwälte OG

(57) **Zusammenfassung**

Die Erfindung betrifft Verfahren zur Herstellung eines Objektes (1) für optische Anwendungen aus einer Aluminiumbasislegierung, wobei das Objekt mit gegebenenfalls durchgehenden Löchern (2) ausgebildet ist, wobei ein Objekt (1) aus einer Aluminiumbasislegierung bereitgestellt wird, wonach im Objekt (1) intrakristalline Ausscheidungen gebildet werden, wonach die intrakristallinen Ausscheidungen zumindest teilweise durch Ätzen gelöst werden, um die Löcher (2) im Objekt (1) zu bilden.

## Beschreibung

Die Erfindung betrifft ein Verfahren zur Herstellung eines Objektes für optische Anwendungen aus einer Aluminiumbasislegierung, wobei das Objekt mit gegebenenfalls durchgehenden Löchern ausgebildet ist.

Des Weiteren betrifft die Erfindung ein entsprechend hergestelltes Objekt.

Objekte mit Löchern mit einem Durchmesser im Nanometerbereich zeigen interessante optische Eigenschaften. Derartige Materialien sind als plasmonische Metamaterialien beispielsweise für die Signalverbesserung bei der oberflächenverstärkten Ramanspektroskopie (surface enhanced Raman spectroscopy bzw. SERS) zur Detektion kleinster Mengen eines Analyten bis hin zum Nachweis einzelner Biomoleküle wie Krebs-Markerproteinen interessant (siehe beispielsweise F. J. Garcia-Vidal et al., J. Opt. A: Pure Appl. Opt. 7, **2005,** 97; R. J. C. Brown et al., J. Raman Spectrosc. 39, **2008**, 1313).

Aus dem Stand der Technik ist es bekannt geworden, für entsprechende Anwendungen in der Spektroskopie beispielsweise durch Elektronenstrahllithografie Objekte mit nanoskaligen Löchern herzustellen. Allerdings sind derartige Verfahren relativ zeit- und damit kostenintensiv. Bekannt ist es im Bereich der Aluminiumlegierungen auch, über lithografische Methoden auf Basis von Kunststoffen Metalle im Nanometerbereich zu strukturieren (C. Huang et al., Beilsteil J. Nanotechnol. 6, **2015,** 1205). Mit Kunststoffmatrizen aufgebrachte Nanostrukturen können sehr präzise erstellt werden, allerdings erfordert die Matrizenherstellung für das spätere Abformen bzw. Bilden der Metallstruktur einen erheblichen Arbeitsaufwand mit mehreren Schritten.

Aufgabe der Erfindung ist es, ein Verfahren der eingangs genannten Art anzugeben, mit dem auf einfache und kostengünstige Weise ein Objekt mit kleinen Löchern bereitgestellt werden kann.

Eine weitere Aufgabe besteht darin, ein entsprechend erhältliches Objekt anzugeben.

Die Aufgabe der Erfindung wird gelöst, wenn bei einem Verfahren der eingangs genannten Art ein Objekt aus einer Aluminiumbasislegierung bereitgestellt wird, wonach im Objekt intrakristalline Ausscheidungen gebildet werden, wonach die intrakristallinen Ausscheidungen zumindest teilweise durch Ätzen gelöst werden, um die Löcher im Objekt zu bilden.

Ein Vorteil eines erfindungsgemäßen Verfahrens liegt darin, dass mit wenigen Prozessschritten ein Objekt bereitgestellt wird, das Löcher aufweist, die einen durchschnittlichen Durchmesser von wenigen Nanometern bis hin zu etwa 20 µm, insbesondere bis etwa 10 µm, vorzugsweise bis etwa 5 µm, aufweisen können. Die Löcher können dabei je nach Dicke des Ausgangsmaterials als Vertiefungen oder gegebenenfalls bei dünnen Ausgangsmaterialien auch als durchgehende Löcher bzw. Öffnungen im Objekt selbst ausgebildet sein.

Die Erfindung macht sich zunutze, dass bei der Wärmebehandlung von Al-Mg-Si-Knetlegierungen (6xxx-Serie), aber auch anderen Aluminiumbasislegierungen intrakristalline Ausscheidungen ausgebildet werden, welche einen Durchmesser im Nanometerbereich oder Mikrometerbereich aufweisen, je nach Temperatur und Dauer einer Wärmebehandlung. Im speziellen Fall einer Al-Mg-Si-Knetlegierung werden intrakristalline Mg-Si-Ausscheidungen in der Form Mg₂Si (β-Phase) oder metastabile Vorläuferphasen (β'- oder β"-Phasen) gebildet. Die Vorläuferphasen, die eine maximale Abmessung von weniger als 100 nm (β"-Phase) bzw. einigen Hundert nm (β'-Phase) aufweisen, wandeln sich letztlich in die β-Phase mit einem durchschnittlichen Durchmesser im Mikrometerbereich um (G. A. Edwards et al., Acta Mater 46, 1998, 3893; R. Vissers et al., Acta Mater 55, 2007, 3815). Bei Anwendung üblicher Ätzmittel (z. B. Keller-Reagenz, Dix-Keller-Reagenz, Flick-Reagenz, verdünnte Flusssäure etc.) oder Elektropolieren mit beispielsweise Perchlorsäure kommt es zur bevorzugten Auflösung der entsprechenden Phasen. Durch diesen Prozess kommt es zur Bildung von Löchern, die wie erwähnt je nach Dicke des Ausgangsmaterials als im Querschnitt durchgehende Öffnungen oder bloß als Vertiefungen analog einem Sackloch ausgebildet sein können.

Neben einem Wegätzen einer intrakristallinen Phase ist es grundsätzlich auch möglich, dass die Aluminiummatrix im Bereich der intrakristallinen Phase angeätzt wird, wenn die intrakristalline Phase edler als die Aluminiummatrix ist. In diesem Fall wird die Aluminiummatrix im Bereich der intrakristallinen Phase derart angegriffen, dass sich die intrakristallinen Partikel lockern und beispielsweise durch Spülen mit einer Flüssigkeit oder Druckbeaufschlagung mit einem Gas entfernt werden können.

Für diverse Anwendungen ist es erforderlich, dass die Löcher mit einer bestimmten durchschnittlichen Größe ausgebildet sind. Dies erfordert es wiederum, dass die aufgelösten bzw. weggeätzten intrakristallinen Phasen eine bestimmte Größe und/oder Form aufweisen. Dies lässt sich erreichen, wenn durch eine Wärmebehandlung eine Größe und/oder Form der intrakristallinen Ausscheidungen eingestellt wird. Maßgeblich für eine eingestellte Größe im Bereich von wenigen Nanometern bis in den Mikrometerbereich sind eine Dauer der Wärmebehandlung sowie die bei der Wärmebehandlung eingestellte Temperatur. Möglich ist es selbstverständlich auch, dass zur Einstellung der Größe und/oder Form Wärmebehandlungen mit Temperaturrampen, somit unterschiedlichen Aufheizzeiten bzw. -raten, Haltedauern und Haltetemperaturen zur Anwendung kommen, um eine für den Einzelfall optimierte Größe der intrakristallinen Ausscheidungen einzustellen.

Interessanterweise wurde festgestellt, dass durch ein Ätzverfahren eine Form der Löcher eingestellt werden kann. Beispielsweise können viereckige oder annähernd quadratische Löcher erstellt werden, wenn bestimmte Ätzreagenzien eingesetzt werden. Analoges gilt für längliche Löcher.

Bevorzugt ist es, dass eine Aluminiumbasislegierung mit Verunreinigungen von weniger als 0,5 Gew.-%, vorzugsweise weniger als 0,4 Gew.-%, insbesondere weniger als 0,2 Gew.-%, eingesetzt wird. Wenn Verunreinigungen wie beispielsweise Eisen merklich hintangehalten werden, wird auch eine Ausbildung grober intrametallischer Phasen, beispielsweise vom AlFeSi-Typ, nachhaltig vermieden. Dadurch lässt sich eine engere Verteilung der Größe der Löcher erzielen. Ein Beispiel für eine entsprechend reine Legierung stellt beispielsweise eine Legierung mit 99 Gew.-% Al, 0,5 Gew.-% Mg und 0,5 Gew.-% Si dar.

Als Ausgangsmaterial für das Objekt aus der Aluminiumbasislegierung kommen Bulk-Materialien infrage. Grundsätzlich ist es aber auch möglich, von einem Dünnschichtmaterial auszugehen, das beispielsweise eine Dicke im Querschnitt von weniger als 100 µm, vorzugsweise weniger als 50 µm, insbesondere weniger als 20 µm, aufweist. Durch eine geeignete Wahl einer Dicke des Ausgangsmaterials und einer Wärmebehandlung können somit Objekte mit im Durchmesser und in der Tiefe variablen Ausnehmungen bzw. Löchern bereitgestellt werden.

Neben einer bevorzugten Anwendung von Aluminiumbasislegierungen mit Magnesium und Silicium können auch andere Legierungssysteme, beispielsweise mit Zink oder Lithium, eingesetzt werden. Solange intrakristalline Phasen vorliegen, können diese auch durch geeignete Ätzprozesse wieder selektiv entfernt werden. Dies kann durch eine unmittelbare Auflösung einer intrakristallinen Phase oder durch lokale Auflösung der Aluminiummatrix um die intrakristalline Phase herum erfolgen, sodass die intrakristalline Phase durch Spülen entfernt werden kann.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 ein allgemeines Prozessschema;
Fig. 2 eine Aufnahme mit einem Rasterelektronenmikroskop (REM);
Fig. 3 eine weitere REM-Aufnahme;
Fig. 4 eine Aufnahme mit einem Transmissionselektronenmikroskop (TEM).

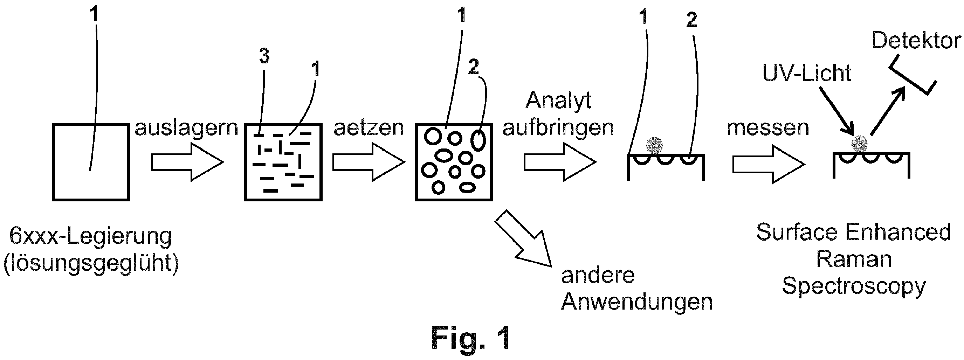

In Fig. 1 ist ein allgemeines Prozessschema für ein erfindungsgemäßes Verfahren schematisch dargestellt. Wie ersichtlich, kann beispielsweise von einer Aluminiumbasislegierung als Objekt 1 ausgegangen werden, wobei eine Al-Mg-Si-Legierung aus der Serie 6xxx Anwendung findet. Durch eine geeignete Auslagerung gemäß dem Stand der Technik werden bekanntermaßen intrakristalline Phasen in der Al-Matrix gebildet. Dabei kann es sich beispielsweise um Mg₂Si-Phasen handeln. Diese intrakristallinen Phasen werden anschließend mit einem geeigneten Reagenz weggeätzt, um vertiefte oder gegebenenfalls durchgehende Löcher 2 in dem Objekt 1 zu bilden. Anstelle der Ausscheidungen 3 treten somit Löcher 2, die allerdings in der Form und der lateralen Erstreckung von den entsprechenden Ausdehnungen der intrakristallinen Ausscheidungen 3 abweichen können. Wie in Fig. 1 ersichtlich ist, kann auf ein entsprechend modifiziertes Objekt 1 ein Analyt aufgebracht werden, um anschließend z. B. spektroskopisch mit erhöhter Empfindlichkeit messen zu können, wie dies beispielsweise in A. Ono et al., Opt. Express 21, 2013, 17447 erörtert ist. Selbstverständlich handelt es sich bei der darstellten spektroskopischen Methode lediglich um ein mögliches Beispiel.

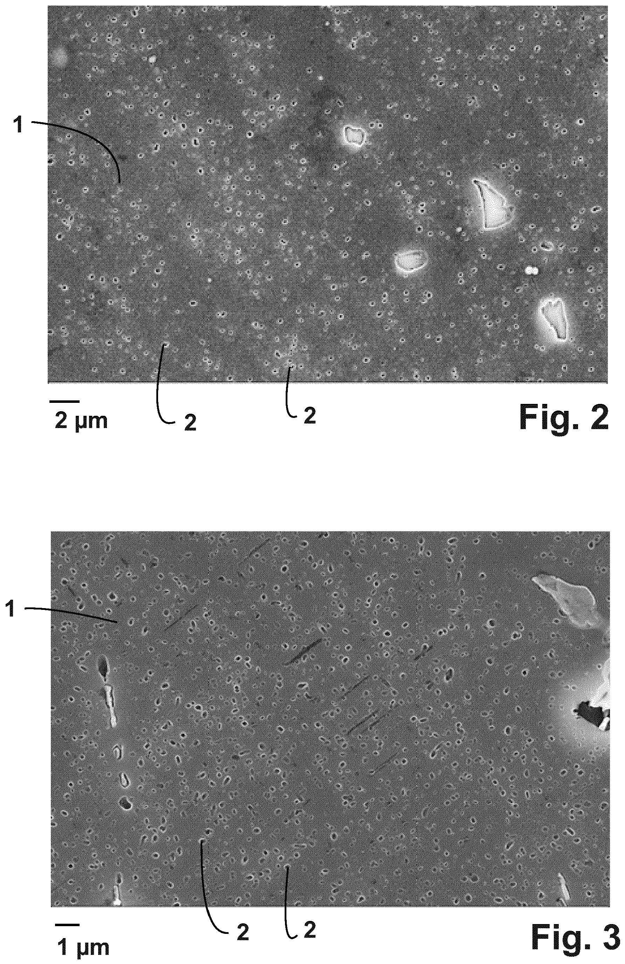

In Fig. 2 ist eine REM-Aufnahme einer Aluminiumbasislegierung AA6082 mit einer T 6-Wärmebehandlung und geätzt mit einem Reagenz nach Dix-Keller dargestellt. Es ist eine Vielzahl von vergleichsweise kleinen Löchern auf Basis intrakristalliner Ausscheidungen 3 erkennbar, wobei allerdings einerseits ausscheidungsfreie Zonen und andererseits Ausscheidungszonen mit AlFeSi-Phasen vorliegen, wobei letztere relativ grob ausgebildet sind.

Eine Ausbildung gemäß Fig. 2 kann verbessert werden, indem auf reinere Legierungen als Ausgangsbasis zurückgegriffen wird, die weniger als 0,5 Gew.-% Verunreinigungen enthalten. Ein entsprechendes Beispiel ist in Fig. 3 anhand einer REM-Aufnahme ersichtlich.

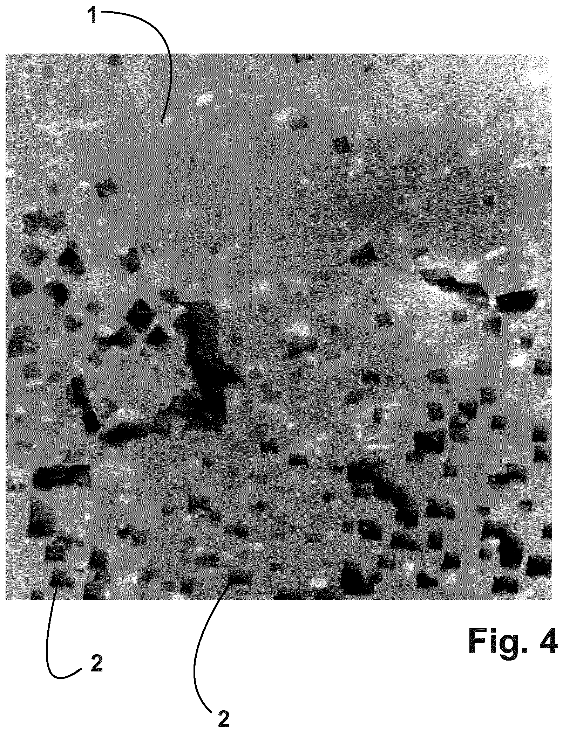

In Fig. 4 ist eine Legierung analog Fig. 2 in einer TEM-Aufnahme dargestellt, wobei das Objekt 1 allerdings mit verdünnter Perchlorsäure elektrochemisch geätzt wurde. Die TEM-Aufnahme zeigt weitgehend viereckige Löcher. Daraus ergibt sich, dass durch Wahl eines geeigneten Ätzmittels bei Vorliegen einer bestimmten intrakristallinen Ausscheidung 3 eine Form der Löcher 2 variabel eingestellt werden kann.

## Patentansprüche

1. Verfahren zur Herstellung eines Objektes (1) für optische Anwendungen aus einer Aluminiumbasislegierung, wobei das Objekt (1) mit gegebenenfalls durchgehenden Löchern (2) ausgebildet ist, **dadurch gekennzeichnet, dass** ein Objekt (1) aus einer Aluminiumbasislegierung bereitgestellt wird, wonach im Objekt (1) intrakristalline Ausscheidungen (3) gebildet werden, wonach die intrakristallinen Ausscheidungen (3) zumindest teilweise durch Ätzen gelöst werden, um die Löcher (2) im Objekt (1) zu bilden.

2. Verfahren nach Anspruch 1, **dadurch gekennzeichnet, dass** durch eine Wärmebehandlung eine Größe und/oder Form der intrakristallinen Ausscheidungen (3) eingestellt wird.

3. Verfahren nach Anspruch 1 oder 2, **dadurch gekennzeichnet, dass** durch ein Ätzverfahren eine Form der Löcher (2) eingestellt wird.

4. Verfahren nach einem der Ansprüche 1 bis 3, **dadurch gekennzeichnet, dass** eine Aluminium-Magnesium-Silicium-Knetlegierung eingesetzt wird.

5. Verfahren nach einem der Ansprüche 1 bis 4, **dadurch gekennzeichnet, dass** eine Aluminiumbasislegierung mit Verunreinigungen von weniger als 0,5 Gew.-%, vorzugsweise weniger als 0,4 Gew.-%, insbesondere weniger als 0,2 Gew.-%, eingesetzt wird.

6. Objekt (1), erhältlich nach einem der Ansprüche 1 bis 5.
